# EUROPEAN PATENT APPLICATION

(11) **EP 2 241 429 A1**
(43) Date of publication of application: **20.10.2010**
(21) Application number: 08870606.4
(22) Date of filing: 22.12.2008
(51) Int. Cl.: B29C 49/48, A63H 3/46

(54) **BLOW-MOLDING DIE SPECIALLY FOR PRODUCING MANNEQUIN**

(30) Priority: 18.12.2007 CN 200720061760 U
(71) Applicant: Liu, Jinghui, Gunagdong 510280 (CN)
(72) Inventor: Liu, Jinghui, Gunagdong 510280 (CN)
(74) Representative: Hryszkiewicz, Danuta
(86) International application number: PCT/CN2008/002038
(87) International publication number: WO 2009/089685

(57) **Abstract**

A blow-molding die specially for producing mannequin comprises a cavity (1), which is arranged with inserts (2, A, B, C). Corners are formed between the modeling surfaces of the inserts (2, A, B, C) and their adjacent modeling surfaces of the cavity (1), and splits (3) are formed between the cavity (1) and the inserts (2, A, B, C). The modeling surfaces of the inserts (2, A, B, C) have bosses towards the cavity (1). The inserts (2, A, B, C) or the bosses are connected to to-and-fro drive devices, and the height of the bosses is equal or less than the moving distance thereof under the to-and-fro drive devices.

## Description

The invention relates to a blow mold, and more particularly to a blow mold specially for producing a mannequin.

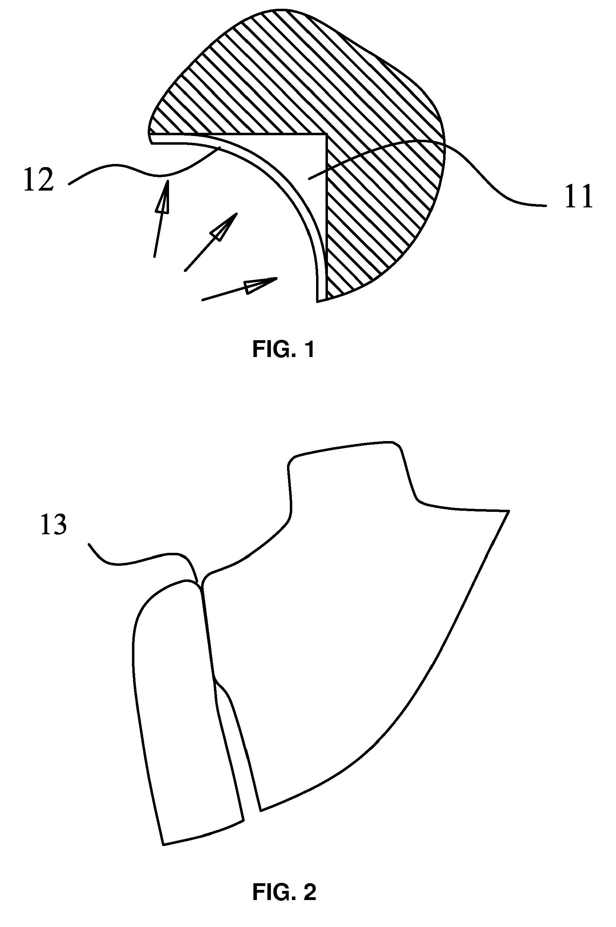

Blow molding of plastics is a method for forming hollow products, and blow-molded products are widely used in daily production and lives. A blow molding process comprises two basic steps: molding a parison, and blowing and expending parison so that it is tightly attached to a mold cavity and thus giving a shape and a size of the mold cavity to a product. The blow molding process is capable of molding a large and a hollow product that cannot be produced by other methods at comparatively high production efficiency. However, due to technical limitation, corners, corner angles, grooves and reinforcing rib of the hollow product made by the blow molding process shall have large arc-shaped or spherical transitions. Under the action of compressed air, force applied to the mold cavity by the parison in different directions is the same. A shown in FIG. 1, ifs a corner exists on a mold, a workpiece 12 firstly contacts with adjacent surfaces of the mold cavity, residual air between the workpiece 12 and the two adjacent surfaces of the mold cavity is pushed and an air bag is formed, and further a dead corner 11 that the workpiece cannot reaches is formed. Since the workpiece 12 cannot reach the corner, a large arc-shaped or spherical position is formed between the adjacent surfaces of the product. Under increased air pressure, glue at these positions may be too thin, which reduces strength thereof and even causes the product to be broken and cannot be molded. Thus, as the product such as a mannequin is formed by multiple components, a concave 13 is formed between adjacent connections (as shown in FIG. 2) after the product made by molding is assembled, which makes the connection unsmooth, and affects appearance after clothes are put thereon. Specially for producing exhibition of underwear or tights, the above-mentioned problems are more obvious and greatly affect overall exhibition effect. Since blow-molded mannequins have the above-mentioned disadvantages, most mannequins are manually produced by traditional resin and glass fiber.

In addition, during assembling of mannequins forming a mannequin, a connecting device is needed for assembling (as described in China Patent No. CN200980508Y titled "connecting device for mannequin"). To fix the connecting device, normally a hole or a groove is disposed on a connecting surface opposite to the produced prop whereby receiving the connecting device, otherwise there is a gap between prop components connected to each other. Since the hole or the groove cannot be formed along with the prop components and secondary processing thereof is required, production efficiency is reduced and production cost is increased.

It is one objective of the invention to provide a blow mold specially for producing a mannequin addressing problems with the prior art, and capable of forming corners on components of mannequins whereby facilitating smooth connection between various components, and forming a groove for receiving a connecting device on a connecting surface.

The blow mold specially for producing a mannequin of the invention is as follows: a blow mold specially for producing a mannequin, comprising a model cavity having a profile, wherein an inserting part is disposed on the model cavity, a modeling surface is disposed in the front of the inserting part, and operates to form a part of the profile of the model cavity, a corner is disposed between the modeling surface of the inserting part and the profile adjacent to the modeling surface, a gap is disposed at connection between the model cavity and the inserting part, a protruding part facing towards the inside of the model cavity is disposed on the modeling surface of the inserting part, the inserting part or the protruding part is connected to a reciprocal drive device that moves towards the model cavity before blow molding and resets after blow molding, and a height of the protruding part is less than or equal to a movement distance of the protruding part under the action of the reciprocal drive device.

The protruding part is disposed on the inserting part, or fixedly or flexibly connected to the inserting part.

The reciprocal drive device is an air cylinder or a hydraulic cylinder, or any device implementing reciprocal movement of the inserting part or the protruding part, a body of the air cylinder or the hydraulic cylinder is disposed on a mold, and an axis of the air cylinder or the hydraulic cylinder is connected to the inserting part or the protruding part.

To obtain better molding effect, a width of the gap between the model cavity and the inserting part is 0.5 - 2.5 millimeters. If the protruding part is connected to the axis of the air cylinder and moves reciprocally, a gap is left between the inserting part and the protruding part, and a width of the gap is preferably 0.5 - 2.5 millimeters.

According to the above-mentioned technique, compared with the blow mold in the prior art, the blow mold of the invention having the inserting part or the protruding part breaks through bottle neck of production of the blow mold industry, and overcomes a problem with the conventional blow mold process that it cannot product a blow mold having right angle edges connected to each other, has non-arch-shaped transition, and implements assembly tolerance fit between different blow molds. A large arc-shaped transition is not used between adjacent surfaces of the invention. Connection between different components is smooth. As the invention is used for producing mannequins, they feature good exhibition effect and support clothes well, and no abnormal concave part on the clothes occurs. The invention makes it possible for implementing mechanical production, and a problem with the conventional process that the blow mold is easy to be broken and fragmented is solved, which improves quality of the product and increases work life thereof. Compared with a conventional technique, the invention reduces harm to workers caused by industrial pollution and improves work environment, and raw materials can be used, which reduces production cost. Using the above-mentioned technology, a cavity is directly disposed on a connecting surface opposite to the prop component whereby receiving a connecting device, and secondary processing thereof is not required, which increase production capacity.

Further description of the invention will be given below in conjunction with accompanying drawings and specific embodiments.

FIG. 1 illustrates a production process of a blow mold for a mannequin in the related art;

FIG. 2 is a schematic view of a mannequin component made via a blow mold in the related art;

FIG. 3 is a schematic view of a blow mold for producing a trunk of a mannequin;

FIG. 4 is a partial enlarged view of a position G in FIG. 3;

FIG. 5 is a perspective view of an inserting part A in FIG. 3;

FIG. 6 is a perspective view of an inserting part B in FIG. 3;

FIG. 7 is a perspective view of an inserting part C in FIG. 3;

FIG. 8 is a schematic view of a blow mold for producing an arm of a mannequin;

FIG. 9 is a perspective view of an inserting part D in FIG. 8;

FIG. 10 is a perspective view of an inserting part E in FIG. 8;

FIG. 11 is a schematic view of a blow mold for producing a lower limb of a mannequin;

FIG. 12 is a perspective view of an inserting part F in FIG. 11;

FIG. 13 is a schematic view of a mannequin made by a blow mold of the invention;

FIG. 14 is a perspective view of a trunk of a mannequin made by a blow mold of the invention;

FIG. 15 is a perspective view of a connecting device of a mannequin made by a blow mold of the invention in FIG. 13; and

FIG. 16 is a perspective view of a connecting device fit with that in FIG. 15.

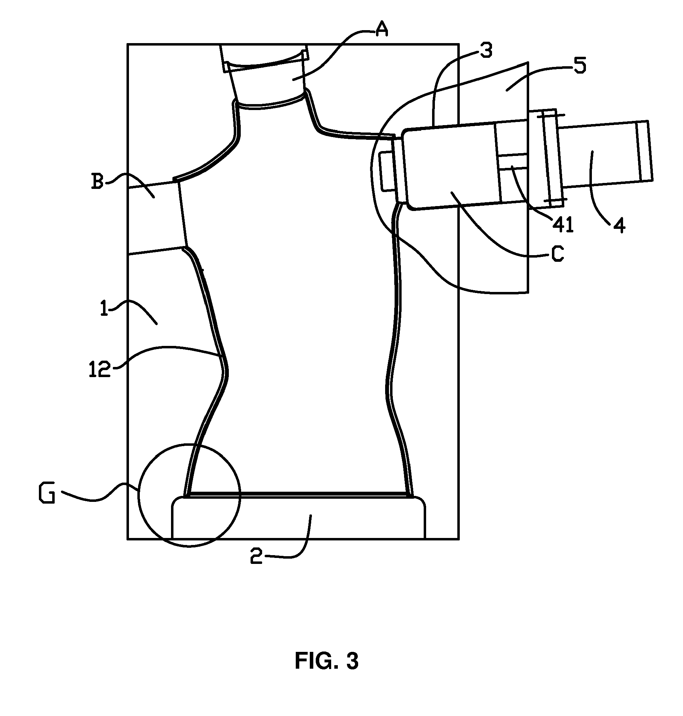

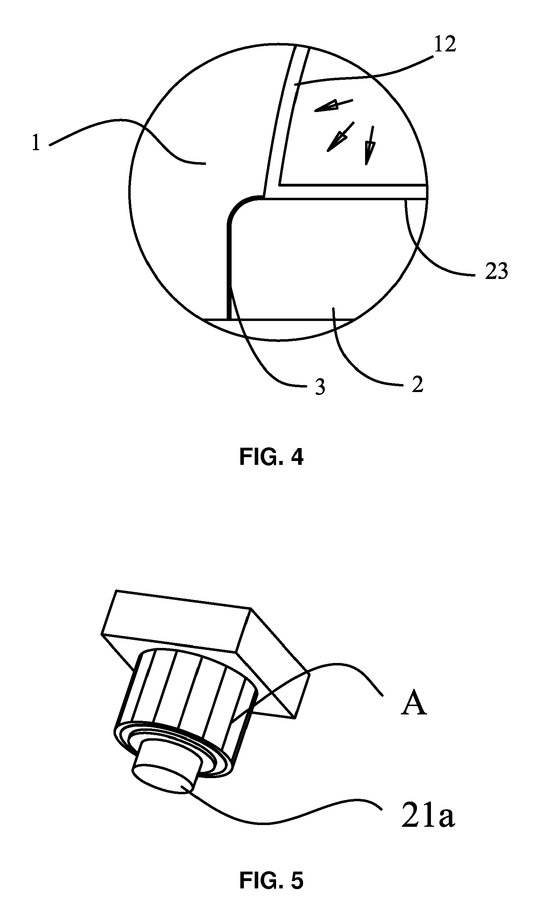

As shown in FIGS. 3 and 4, a blow mold for molding a trunk of a mannequin of the invention comprises a model cavity 1 for molding the trunk thereof, and multiple inserting part A, B, C and 2 are disposed on positions of the model cavity 1 for molding connecting surfaces. Taking the inserting part 2 for example, a modeling surface 23 disposed in the front of the inserting part 2 forms a part of the profile of the model cavity 1. A corner of 90 degrees is disposed between the modeling surface 23 of the inserting part and the adjacent profile of the model cavity 1. A gap 3 is disposed at connection between the model cavity 1 and the inserting part 2, and operates as a venting slot. A width of the venting slot is dependent on a size of a final product and air pressure, and normally 0.5 - 2.5 mm. During production of a mannequin, a width of the venting slot is 1.5 mm. As shown in FIG. 4, under the action of air pressure, a workpiece 12 discharges air in a dead corner 11 via the gap 3 whereby enabling the workpiece 12 to be closely attached to the wall of the model cavity 1, and to the inserting part 2. Meanwhile, small amount of burrs may occur at the venting slot of the final product and be eliminated after a follow-up process, and thus a blow mold product with a non-arc-shaped transition is formed.

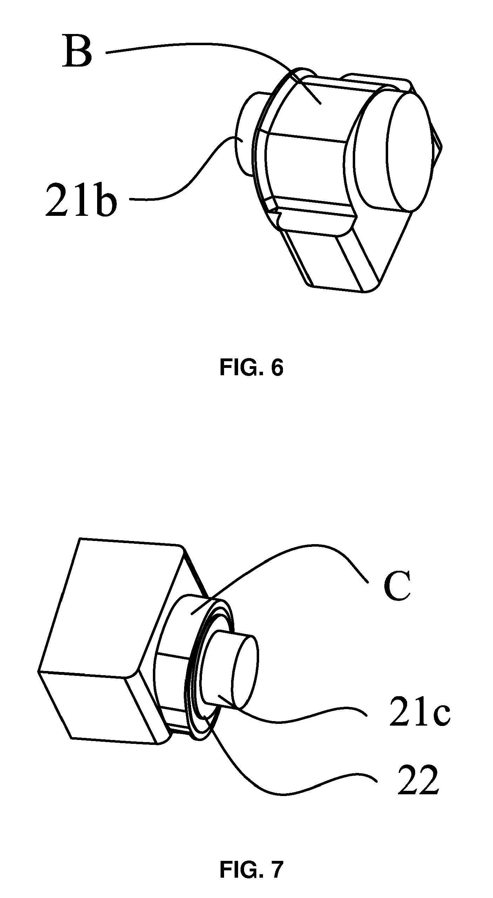

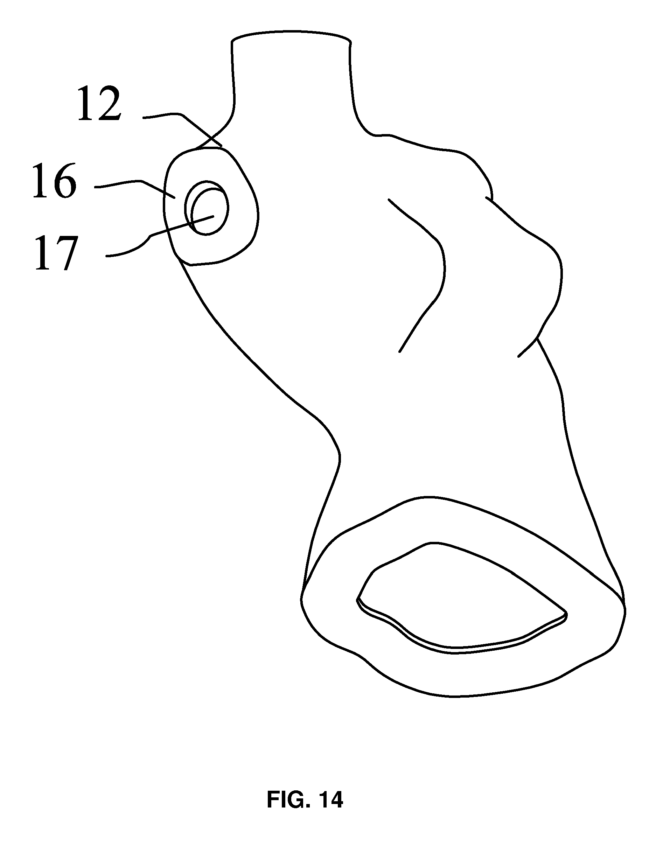

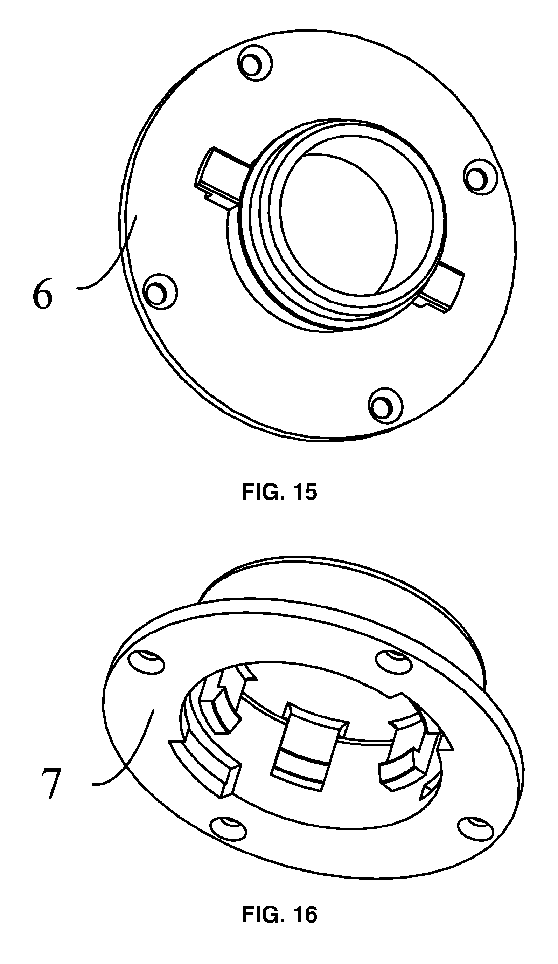

As connecting devices 6 and 7 are to be installed on the connecting surface, a cavity is integrally formed during blow molding to prevent secondary processing. As shown in FIGS. 3, 5 and 7, a neck and shoulders of the mannequin are respectively connected to a head and two arms thereof. Therefore, multiple protruding parts 21 a, 21 b and 21 c are respectively disposed on a modeling surface of the inserting parts A, B and C. Taking the inserting part C for example, to integrally form a cavity 17 (as shown in FIG. 14) on a connecting part between the shoulder of the trunk and the arm, the protruding part 21 c is disposed on the modeling surface in the front of the inserting part C, and a height of the protruding part 21 c is approximately 23 mm. Meanwhile, to prevent dimension errors of the blow mold product and to facilitate convenient assembling of the connecting device 7, a step 22 with a height of 2 - 3 mm is disposed at the root of the protruding part 21 c. The protruding part 21 c is disposed on the inserting part C, or connected to the inserting part C by welding or close fit, or via a screw. The back of the inserting part C is connected to a piston shaft 41 of an air cylinder or a hydraulic cylinder 4. A body of the air cylinder or the hydraulic cylinder 4 is disposed on a mold 5 or other components. The inserting part C reciprocally moves under the action of the piston shaft 41. Thus, another gap 3 is disposed at connection between the model cavity 1 and the inserting part C and operates to discharge air. A width of the gap 3 is normally 0.5 - 2.5 mm. Preferably, a width of the gap 1.5 mm. Before blow molding, the inserting part C move forwards so that the modeling surface in the front of the inserting part C is aligned with the adjacent profile in the model cavity 1. After blow molding is finished, the inserting part C moves backwards under the action of the piston shaft 41, and a moving distance thereof is greater than (or at least equal to) a height of the protruding part 21 c on the inserting part C. Therefore, after the blow molding process is completed, a cavity 17 operating to receive the connecting devices 6 and 7 in FIG. 15 or 16, and a connecting surface 16 are formed at the inserting part C, and smoothness of the connecting plane 16 can be ensured. Structure of the connecting devices 6 and 7 are described in China patent CN200980508Y, and will not be described hereinafter any more.

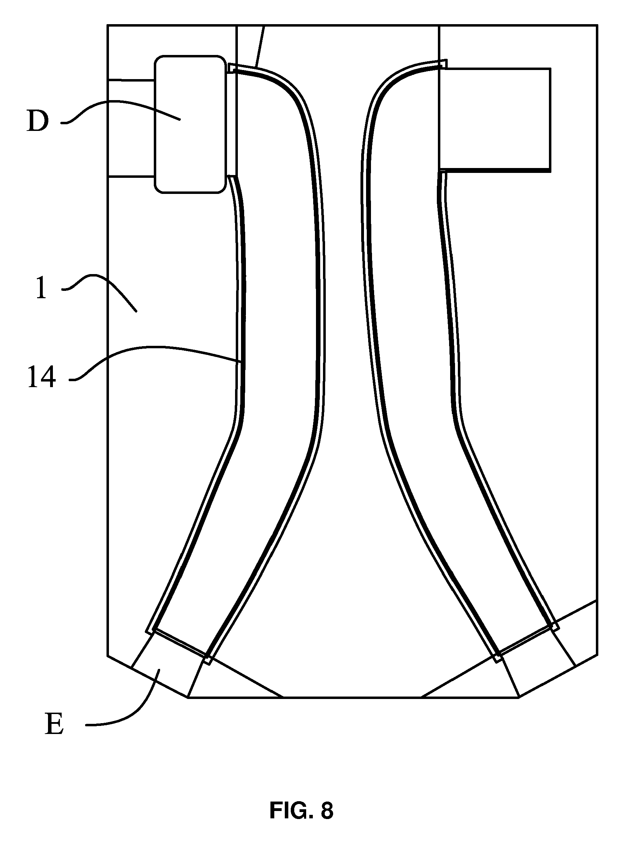

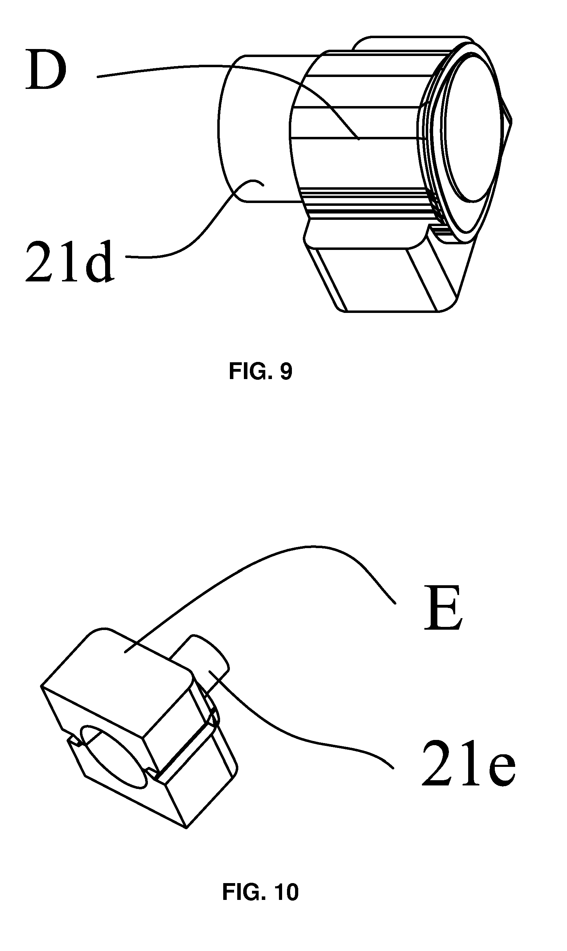

FIGS. 8 - 10 illustrate a blow mold and inserting parts thereof operating to mold the arm 14, protruding parts 21 d and 21c are respectively disposed on a modeling surface of the inserting parts D and E, and a cavity corresponding thereto is integrally formed.

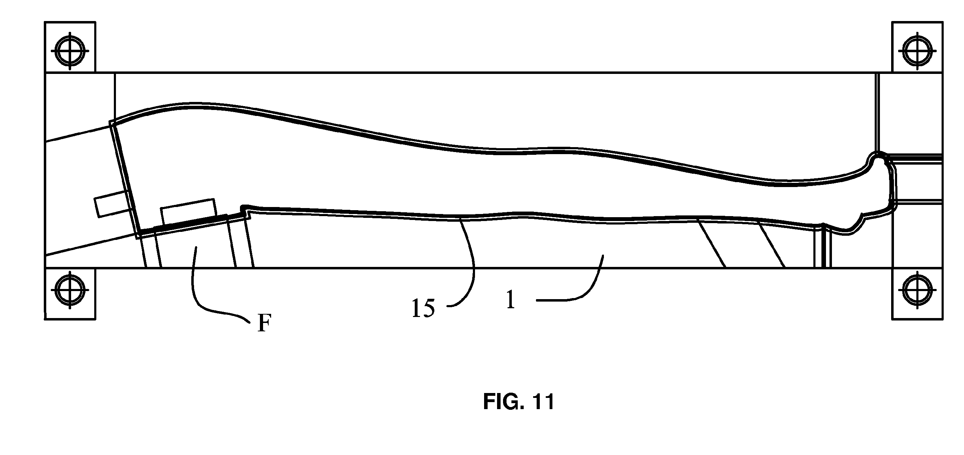

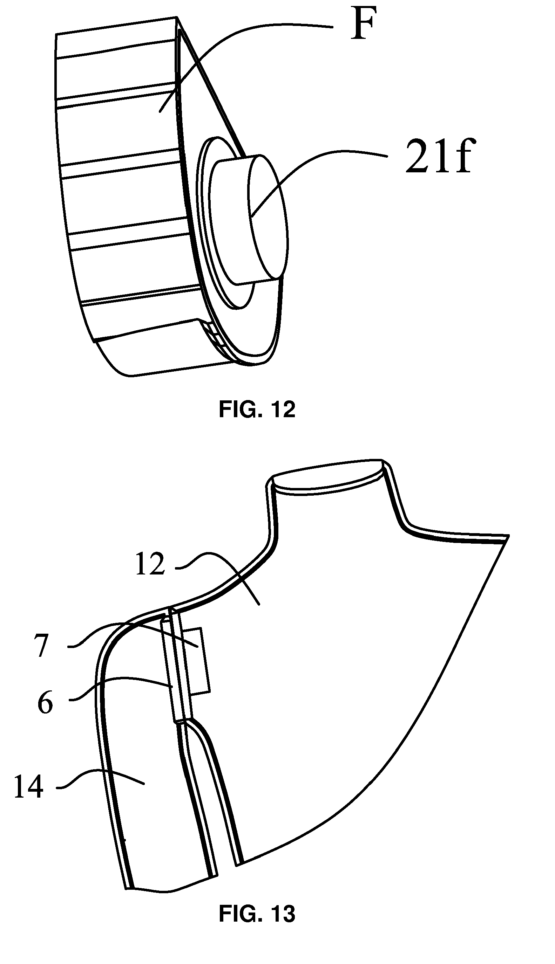

FIGS. 11 and 12 illustrate a blow mold and inserting parts disposed on both sides thereof operating to mold the lower limb 15. The inserting part F operates to mold connecting surface on one side of the lower limb 15. It should be noted that different from the related art in which connecting surfaces of a left and a right lower limb are disposed on a thigh of one lower limb, connecting surfaces of a left and a right lower limb made by the blow mold are opposite to the center of the lower limb (namely a boundary of a hip), which moves a connecting line between adjacent components to a hiding position, and thus improving exhibition effect of a mannequin wearing tights, socks or pants, and preventing a concave part from appearing thereon. In addition, this structure makes it convenient to take on or off trousers. At the same time, since the left and the right lower limb are capable of rotating for a certain angle after being connected via the connecting devices 6 and 7 as shown in FIGS. 15 and 16, exhibition posture of the mannequin can be conveniently adjusted. A specific structure is as follows: a surface of one lower limb 15 is disposed in the model cavity 1, a connecting surface between two lower limbs 15 is disposed on an inserting part F. A protruding part 21f is disposed on the inserting part F. The inserting part F is disposed in the model cavity 1 whereby forming a complete model cavity for molding a lower limb. The back of the inserting par F is connected to a piston shaft of an air cylinder or a hydraulic cylinder (not shown). A gap is disposed between the inserting part F and the model cavity. Under the action of compressed air, a parison is molded along the model cavity 1. Since a gap is set, according to fluid movement law, the parison fills the surface between the model cavity 1 and the inserting part F, and thus a thigh of the mannequin having a right angle or an approximate right angle at the connecting part is molded.

Alternatively, the inserting part is fixed on the model cavity 1, the protruding part in the front of the inserting part is flexibly connected to the inserting part, and a gap is disposed therebetween to ensure air venting and relative movement. The other end of the protruding part is directly or indirectly connected to a piston shaft of an air cylinder or a hydraulic cylinder to facilitate reciprocal movement. Before blow molding, the protruding part move forwards to a position and is fixed. After blow molding, the protruding part moves backwards under the action of the piston shaft, and a moving distance thereof is greater than (or at least equal to) a height of the protruding part. Therefore, after the blow molding process is completed, a cavity is formed at the protruding part, and operates to receive the connecting devices 6 and 7.

The mannequin produced by the blow mold of the invention has a corner on the components thereof whereby facilitating perfect connection between any two of the trunk, the lower limb, the left and the right arm, and the head, and a cavity is directly formed on the connecting surface, which meet requirement for integrity of structure and for use, improves a blow technique of the mannequin, features high production capacity and low cost.

## Claims

1. A blow mold specially for producing a mannequin, comprising a model cavity having a profile,
**characterized in that**
an inserting part is disposed on said model cavity; a modeling surface is disposed in the front of said inserting part, and operates to form a part of said profile of said model cavity; a corner is disposed between said modeling surface of said inserting part and said profile adjacent to said modeling surface; a gap is disposed at connection between said model cavity and said inserting part; a protruding part facing towards the inside of said model cavity is disposed on said modeling surface of said inserting part; said inserting part or said protruding part is connected to a reciprocal drive device that moves towards said model cavity before blow molding and resets after blow molding; and a height of said protruding part is less than or equal to a movement distance of said protruding part under the action of said reciprocal drive device.

2. The blow mold of claim 1, **characterized in that** said protruding part is disposed on said inserting part, or fixedly or flexibly connected to said inserting part.

3. The blow mold of claim 1, **characterized in that** said reciprocal drive device is an air cylinder or a hydraulic cylinder; a body of said air cylinder or said hydraulic cylinder is disposed on a mold; and an axis of said air cylinder or said hydraulic cylinder is connected to said inserting part or said protruding part.

4. The blow mold of any one of claims 1 to 3, **characterized in that** a width of said gap is 0.5 - 2.5 mm.

5. The blow mold of any one of claims 1 to 3, **characterized in that** a height of said protruding part is 4 - 30 mm.
